# DEMANDE DE BREVET EUROPEEN

(11) **EP 0 565 426 A1**
(43) Date de publication de la demande: **13.10.1993**
(21) Numéro de dépôt: 93400883.0
(22) Date de dépôt: 05.04.1993
(51) Int. Cl.: E03B 1/04

(54) **Procédé et dispositif d'économie d'eau**

(30) Priorité: 06.04.1992 FR 9204179
(71) Demandeur: ELF ANTAR FRANCE, F-92400 Courbevoie (FR)
(72) Inventeur: Arthaud, Didier, F-69760 Limonest (FR)
(74) Mandataire: Boillot, Marc

(57) **Abrégé**

Procédé consistant à évaluer en continu, immédiatement après utilisation, l'état de pollution d'une eau, à orienter cette dernière en fonction de cette évaluation soit vers un réseau d'égout (3), soit vers un réseau de récupération (4) prévu à cet effet et à recycler l'eau ainsi récupérée pour des tâches s'accommodant d'une eau faiblement polluée. Dispositif permettant la mise en oeuvre du procédé.

## Description

La présente invention se rapporte à un procédé permettant de mieux utiliser l'eau potable et à un dispositif permettant la mise en oeuvre du procédé.

L'eau potable coûte de plus en plus cher. Dans les années à venir, le phénomène va encore s'accentuer puisque d'une part cette eau va devenir de plus en plus difficile à produire et d'autre part le traitement des eaux usées va devenir de plus en plus sophistiqué du fait de l'augmentation des exigences liées à l'environnement.

Actuellement, une partie de l'eau puisée sur le réseau potable se trouve être rejetée à l'égout alors qu'elle n'est pas vraiment polluée. C'est le cas par exemple
- de l'eau ayant servi au lavage des légumes,
- de l'eau puisée en été où on laisse couler le robinet pendant plusieurs secondes afin de disposer d'eau fraîche,
- de l'eau utilisée lors des derniers rinçages d'une machine à laver le linge ou la vaisselle,
- de l'eau qui coule pendant tout le temps de la toilette d'une personne,

Il est dommage de perdre cette eau faiblement polluée alors qu'elle peut être utilisée pour l'arrosage des jardins, le lavage des sols et des automobiles, le gâchage du béton, etc...

La présente invention permet de récupérer cette eau faiblement polluée. Elle se rapporte à un procédé consistant évaluer en continu immédiatement après utilisation l'état de pollution de l'eau, à l'orienter en fonction de cette évaluation soit vers le réseau d'égout, soit vers un réseau de récupération prévu à cet effet et à recycler l'eau ainsi récupérée pour des tâches s'accommodant d'une eau faiblement polluée.

L'évaluation du degré de pollution de l'eau peut être laissé à l'appréciation de l'utilisateurqui réalisera alors de façon manuelle l'orientation de l'eau vers les égouts ou vers le circuit de récupération.

Cette évaluation peut se faire également de façon automatique par tout moyen permettant de mesurer le degré de pollution d'une eau. Le résultat de la mesure aiguille, en temps réel, le flux de liquide vers le circuit approprié.

La présente invention consiste également en un dispositif permettant de mettre en oeuvre le procédé ci-dessus. Il se compose d'une entrée pour les eaux usées, d'un siphon et d'une sortie vers le réseau d'égouts, comme un siphon d'évier ou de lavabo ordinaire. Il est caractérisé en ce qu'il comporte également, en amont de la dite sortie, une autre évacuation qui est raccordée au réseau d'eau à récupérer et un obturateur placé entre les deux sorties. Selon que l'obturateur est ouvert ou fermé, les eaux en provenance de l'entrée du siphon sont orientée vers le circuit de récupération ou le réseau des égouts.

L'invention sera mieux comprise, grâce à la description ci-après, qui se rapporte à un mode de réalisation préféré, donné à titre d'exemple non limitatif, et expliqué avec références au dessin annexé :
- figure 1 : réseau de récupération des eaux peu usées,
- figure 2 : représentation d'un siphon de l'art antérieur,
- figure 3 : représentation du siphon d'évacuation selon l'invention.

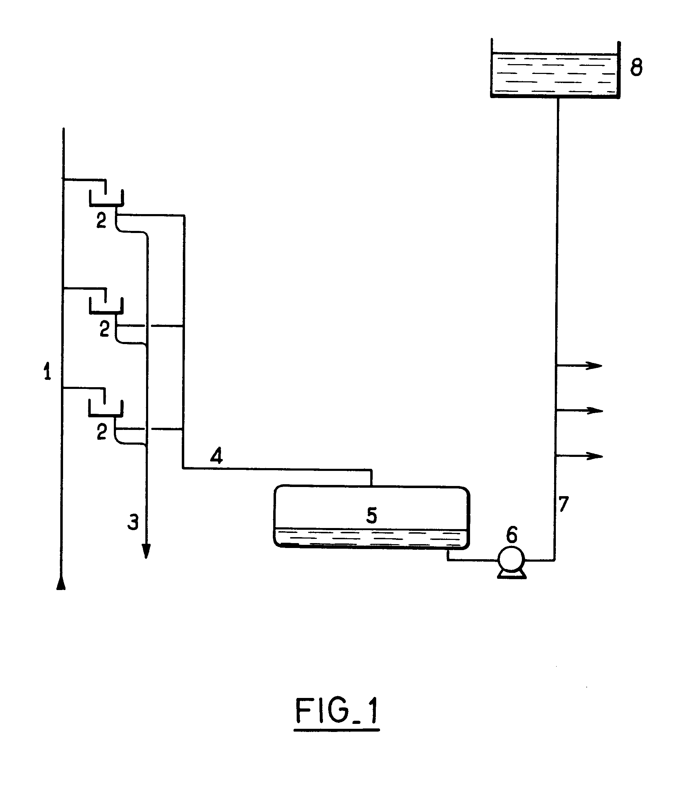

Le réseau d'eau potable distribuée sur l'ensemble d'un site tel que bureaux, maisons individuelles, immeuble d'habitation est généralement unique. Cette eau va donc être utilisé à une multitude de tâches dont la plupart ne nécessiteraient pas un fluide d'une telle qualité. Le procédé objet de l'invention sera mis en oeuvre tel que représenté sur la figure 1.

Une installation de distribution classique d'eau potable comporte un réseau d'arrivée (1), des postes d'utilisation (2), tels que éviers, lavabos, baignoires et machines à laver le linge et la vaisselle. L'eau utilisée sur ces postes est évacuée vers l'égout par un réseau d'évacuation (3). Le procédé consiste à récupérer au niveau du poste d'utilisation (2) les eaux faiblement polluées par un réseau de récupération (4) vers un réservoir (5). L'eau ainsi collectée peut alors être réutilisée dans un réseau (7), la mise en charge étant assurée par un dispositif de pompage (6) et, éventuellement, une bâche (8) placée à une hauteur suffisante pour assurer une pression suffisante dans le réseau (7).

La discrimination entre les eaux faiblement polluées et les eaux devant être envoyées à l'égout peut être faite soit par l'utilisateur, qui disposera alors d'une commande manuelle pour aiguiller le flux liquide soit par une sonde mesurant une caractéristique de l'eau variant en fonction du degré de pollution de l'eau et pilotant un dispositif automatique d'aiguillage.

Les sondes peuvent être du type de celles qui mesurent la résistivité de l'eau. Tant que cette résistivité est supérieure à une valeur de l'ordre de 1000 ohms on considère que l'eau est réutilisable pour certaines tâches et l'on aiguille le flux de façon à ce que les eaux, pendant tout le temps où leur résistivité est suffisante, soient renvoyées dans le réseau (4). Lorsque la résistivité passe sous la barre des 1000 ohms, l'aiguillage bascule et les eaux sont renvoyées vers le réseau d'évacuation (3).

La valeur de seuil de la résistivité dépend bien entendu de l'utilisation qui est faite de l'eau récupérée.

L'utilisation de toute autre sonde permettant de mesurer le degré de pollution est possible et laissée à l'appréciation de l'homme du métier.

Les postes d'utilisation de l'eau potable sont en général équipé de siphons. Afin de permettre la mise en oeuvre du procédé, la présente invention se compose également d'un siphon modifié.

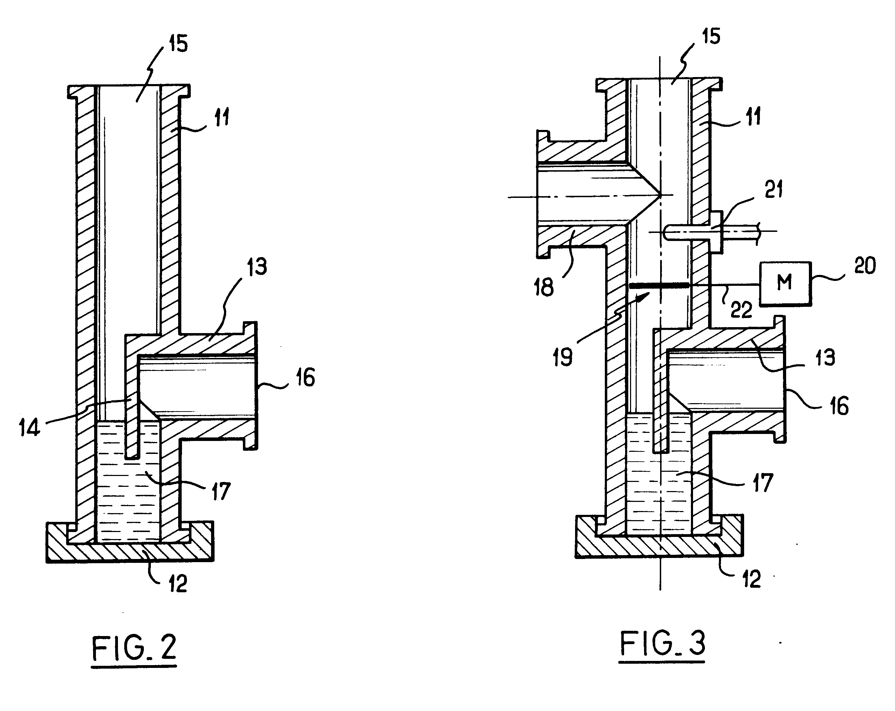

Un siphon d'évacuation classique représenté sur la figure 2 comporte un corps (11) muni à sa partie inférieure d'une bouchon (12) vissé. Le corps (11) comprends latéralement et vers sa partie inférieure une dérivation (13) et une partie (14) qui assure la fonction siphon proprement dite. Cette partie peut être réalisée également en coudant le corps (11).

Le poste d'utilisation est raccordé à l'orifice (15) et le réseau d'égout à l'orifice (16). La fonction siphon assure à la partie basse la présence d'une certaine quantité d'eau (17) dont le rôle est d'isoler le réseau d'égout du reste de l'installation.

La figure 3 montre le siphon modifié selon l'invention. Dans le même encombrement qu'un siphon classique on trouvera les mêmes parties à savoir un corps (11), un bouchon amovible (12), une dérivation (13) et une partie (14). L'arrivée de l'eau après utilisation est située en (15) et l'évacuation vers l'égout se trouve en (16).

Le siphon selon la figure 3 est caractérisé en ce qu'une seconde dérivation (18) est placée entre l'entrée des eaux (15) et l'évacuation vers l'égout (16). En dessous de cette évacuation sera placée un dispositif de fermeture, tel qu'un papillon (19) qui pourra occuper deux positions, une mettant en communication (15) et (16), l'autre empêchant cette communication ce qui a pour effet d'assurer l'évacuation des eaux par la dérivation (18) vers le réseau de récupération (4) décrit ci-dessus.

La commande du papillon (19) peut se faire de façon manuelle. La timonerie de commande est facile à imaginer par l'homme du métier, elle peut être du même genre que celle qui assure la commande d'une bonde de lavabo ou de baignoire.

Cette commande peut aussi se faire de façon automatique. On peut relier par un axe (22) le papillon (19) à un servo-moteur (20). La commande à l'ouverture ou à la fermeture du papillon peu se faire par l'intermédiaire d'une sonde (21) mesurant une caractéristique de l'eau dont la valeur dépend du degré de pollution de celle-ci.

Ce peut-être une sonde résistive telle que celle que l'on trouve chez le constructeur TACUSEL, ref. XE 100 à XE 180, TE 100 à TE 180. Ce peut être également une sonde réalisée plus grossièrement à l'aide de deux fils de cuivre (nus ou étamés). Une telle réalisation donnera une valeur assez grossiére de la résistivité, mais suffisante pour discriminer une eau usée d'une eau propre. Bien entendu, cette sonde, réalisée en métaux non nobles aura une durée de vie plus courte du fait des problèmes d'oxydation mais un coût environ 100 fois inférieur à celui des sondes TACUSEL citée ci-dessus.

La sonde, quelque soit sa réalisation indiquera en permanence la valeur de la résistivité de l'eau après utilisation. Si cette valeur est supérieure à 1000 ohms environ, la sonde (21) enverra au servo-moteur (20) un ordre de fermeture du papillon, papillon qui restera fermé tant que la résistivité sera suffisante. Si cette valeur est inférieure à 1000 ohms ou si aucun signal ne parvient au servo-moteur, ce dernier maintiendra le papillon ouvert de façon à éviter dans tous les cas une pollution des eaux récupérées.

La valeur de 1000 ohms donnée pour le seuil de récupération de l'eau dépend bien entendu de l'utilisation envisagée pour l'eau récupérée et pourra être ajustée par l'homme du métier en fonction des besoins.

Les dimensions d'un tel siphon seront étudiées à partir des dimensions des siphons existants actuellement sur le marché de façon à pouvoir monter les siphons de l'invention à la place des siphons de l'art antérieur sans adaptation particulière.

La description précédente n'est donnée qu'à titre d'exemple et elle ne limite nullement le domaine de l'invention dont on ne sortirait pas en remplaçant les détails d'exécution décrits par tous autres équivalents.

## Revendications

1 - Procédé consistant à évaluer en continu, immédiatement après utilisation, l'état de pollution d'une eau, à orienter cette dernière en fonction de cette évaluation soit vers un réseau d'égouts (3), soit vers un réseau de récupération (4) prévu à cet effet et à recycler l'eau ainsi récupérée pour des tâches s'accommodant d'une eau faiblement polluée.

2 - Procédé selon la revendication 1 caractérisé en ce que l'évaluation du degré de pollution de l'eau est laissée à l'appréciation de l'utilisateur.

3 - Procédé selon la revendication 1 caractérisé en ce que l'évaluation du degré de pollution de l'eau se fait par un capteur commandant de façon automatique l'aiguillage du flux de liquide vers le réseau d'égout ou vers le réseau de récupération.

4 - Procédé selon la revendication 3 caractérisé en ce que l'évaluation se fait au moyen d'une sonde résistive orientant l'eau vers le circuit de récupération pour une valeur de la résistivité supérieure à 1 000 Q.

5 - Dispositif d'évacuation des eaux permettant la mise en oeuvre du procédé ci-dessus comportant une arrivée (15) pour les eaux usées, un siphon et une sortie (16) vers le réseau d'égouts caractérisé en ce qu'il comporte en amont de la dite sortie (16) une autre évacuation (18) et un obturateur (19) placé entre les deux sorties.

6 - Dispositif selon la revendication 5 caractérisé en ce que en ce que l'obturateur (19) est relié à une commande manuelle accessible à l'utilisateur.

7 - Dispositif selon la revendication 5 caractérisé en ce qu'une sonde (21) est placée dans le courant fluide en provenance de l'arrivée (15).

8 - Dispositif selon la revendication 7 caractérisé en ce que la sonde (21) commande l'obturateur (19) par l'intermédiaire d'une chaîne de commande et d'une motorisation (20)
